# EUROPÄISCHE PATENTSCHRIFT

(11) **EP 1 233 215 B1**
(45) Veröffentlichungstag und Bekanntmachung des Hinweises auf die Patenterteilung: **10.05.2006**
(21) Anmeldenummer: 02002427.9
(22) Anmeldetag: 01.02.2002
(51) Int. Cl.: F16J 15/34

(54) **Einbaufertige Gleitringdichtung für die Welle einer Pumpe**
Ready to fit mechanical seal for the shaft of a pump
Garniture mécanique d'étanchéité prête à monter pour l'axe d'une pompe

(30) Priorität: 15.02.2001 DE 10106978
(43) Veröffentlichungstag der Anmeldung: 21.08.2002
(73) Patentinhaber: GRUNDFOS A/S, 8850 Bjerringbro (DK)
(72) Erfinder: Vedsted, Per Frost, 8850 Bjerringbro (DK); Grann, Helge, 8850 Bjerringbro (DK); Pedersen, Carsten H., 8850 Bjerringbro (DK)
(74) Vertreter: Vollmann, Heiko

(56) Entgegenhaltungen:
- EP-A- 0 628 756
- DE-U- 29 704 914
- US-A- 4 377 290
- Deutsche Norm EN 12756:2000 "GLEITRINGDICHTUNGEN - Hauptmasse, Bezeichnung und Werkstoffschlüssel" 08. November 1999 (1999-11-08)

## Beschreibung

Die Erfindung geht aus von einer einbaufertigen Gleitringdichtung gemäß dem Oberbegriff des Anspruchs 1 für die Welle einer Pumpe, wobei die Welle an einen Antriebsmotor ankuppelbar ist.

Derartige, eine zusammenhängende Baueinheit bildende und eine sogenannte Wellenschutzhülse aufweisende Gleitringdichtungen, die im Handel auch unter der Bezeichnung *Kartuschen-, Patronen-* oder Cart*ridge-Dichtung* erhältlich sind, sind bekannt. Sie umfassen im wesentlichen die Wellenschutzhülse und zwei darauf montierte Einheiten, nämlich eine rotierende Einheit, die u. a, den rotierenden Gleitring, eine diesen axial mit einem vorbestimmten Wert belastende Druckfeder sowie einen inneren elastischen Dichtungsring aufweist, und eine stationäre Einheit, die u. a. den stationären Gegenring für den rotierenden Gleitring und ein Montageteil zum Schraubbefestigen der Gleitringdichtung an der Gehäuseendwand einer Pumpe aufweist. Der bei eingebauter Gleitringdichtung aus der Gehäuseendwand der Pumpe herausragende Längenabschnitt der Wellenschutzhülse weist an seinem freien Ende z. B. einen integralen, gegenüber der Wandstärke der Wellenschutzhülse dickeren Bund mit mehreren radialen Gewindelöchem auf, in denen Schrauben zum Befestigen der Wellenschutzhülse auf der Welle der Pumpe sitzen.

Eine als Kartuschendichtung ausgebildete Gleitringdichtung zur Abdichtung einer rotierenden Welle gegenüber einer Gehäusewand ist in DE 297 04 914 U 1 beschrieben. Bei dieser Gleitringdichtung sind in der Gehäusewandung ein die Welle ringförmig umgebender Aufnahmeraum sowie ein den Aufnahmeraum abschließender Haltering vorgesehen. An diesem Haltering ist ein erster Gleitring befestigt. Ein zweiter Gleitring, welcher in dem Aufnahmeraum auf der Welle montiert ist, ist gegen den ersten Gleitring verspannt. Der zweite Gleitring ist auf einer auf die Welle aufschiebbaren Wellenschutzhülse angebracht, die durch den Haltering hindurch ragt und außerhalb des Halterings auf der Welle befestigt ist.

Für Gleitringdichtungen dieser bekannten Art ist in der Endwand des Pumpengehäuses ein spezieller, durch den Pumpenhersteller festgelegter Einbauraum vorgesehen. Die mit dieser Dichtung ausgerüsteten, teuren Pumpen erbringen eine hohe Leistung von 25 KW und größer und haben einen Wellendurchmesser, der in der Regel größer als 30 mm ist. Für Pumpen mit erheblich kleinerer Leistung, deren Welle einen Durchmesser von 8 bis 30 mm aufweist, wird eine nach DIN genormte Gleitringdichtungskonstruktion verwendet, die keine Wellenschutzhülse aufweist und für die ein für die jeweils gewünschte Welle normierter Einbauraum in der Endwand des Pumpengehäuses zu verwenden ist. Im Falle eines Defektes einer solchen Normdichtung ist das Auswechseln derselben zeitraubend und kostspielig, weil die Pumpe im Bereich der Dichtung zu einem erheblichen Teil demontiert und wieder montiert werden muss, was auch für die Einzelteile der Normdichtung gilt, für welche Arbeitsgänge spezielles Fachpersonal erforderlilch ist. Außerdem ist die Verwendung einer einbaufertigen Gleitringdichtung vom Kartuschentyp in einem normierten Einbauraum und damit die Nutzung des Vorteils des schnellen Auswechselns einer solchen Gleitringdichtung nicht möglich, weil eine Gleitringdichtung vom Kartuschentyp, also mit einer Wellenschutzhülse, nicht in den normierten Einbauraum hinein passt, weil dieser Einbauraum für die im Außendurchmesser größere Gleitringdichtung vom Kartuschentyp im Durchmesser zu klein ist.

Die Aufgabe der Erfindung besteht in der Verbesserung einer einbaufertigen Gleitringdichtung der einleitend angeführten Art dahingehend, dass sie zum Einsetzen in einen normierten Einbauraum für eine Norm-Gleitringdichtungskonstruktion ohne Wellenschutzhülse geeignet ist.

Die Lösung der Aufgabe ist in dem Patentanspruch 1 angeführt.

Die erfindungsgemäße Lösung gestattet es, den Vorteil der Gleitringdichtung der Kartuschenbauart, nämlich ihre schnelle und kostengünstige Auswechselbarkeit im Defektfall, auch bei solchen normierten Einbauräumen zu nutzen, die für nach DIN genormte Gleitringdichtungskonstruktionen ohne Wellenschutzhülse bestimmt sind. Solche Einbauräume und die zugehörigen, vom jeweils gewählten Wellendurchmesser der Pumpe abhängigen Norm-Gleitringdichtungen werden für Kreiselpumpen mit kleinerer Leistung von etwa 0,37 KW bis 25,0 KW und mit einem Pumpenwellendurchmesser von etwa 8 bis 30 mm verwendet. Diese Pumpen werden in Großserien gefertigt und sind daher billig in der Herstellung, so dass ein Austausch einer defekten Norm-Gleitringdichtung bei einer solchen Pumpe aus Kostengründen unwirtschaftlich ist und daher meistens zur Verschrottung der Pumpe führt. Mit der erfindungsgemäßen Gleitringdichtung sind die entsprechenden Reparaturkosten bei billigen Pumpen der vorgenannten Art jedoch beträchtlich gesenkt, weil eine Demontage und erneute Montage der Endwand des Pumpengehäuses einschließlich der einzelnen Dichtungsteile nicht mehr erforderlich sind und durch angelerntes Personal erfolgen kann. Eine defekte erfindungsgemäße Kartuschendichtung kann schnell ausgewechselt werden, da sie selbst nur von der Pumpenendwand und der Pumpenwelle gelöst zu werden braucht, nachdem vorher der Antriebsmotor von der Pumpe abgekoppelt worden ist, wonach die defekte Kartuschendichtung von der Pumpenwelle abgezogen wird. Die Montagevorgänge für eine neue erfindungsgemäße Gleitringdichtung vom Kartuschentyp erfolgt in umgekehrter Reihenfolge. Außer der Weiterverwendung der Pumpe besteht ein weiterer Vorteil der erfindungsgemäßen Gleitringdichtung darin, dass der Benutzer einer solchen Pumpe wählen kann, ob er darin eine erfindungsgemäße Gleitringdichtung oder eine bekannte Norm-Gleitringdichtung eingebaut haben möchte.

Die Erfindung ist nachstehend anhand eines in den anliegenden Zeichnungen dargestellten Ausführungsbeispieles näher erläutert. Es zeigen:
- Fig.1: eine erste Ausführungsform der Erfindung in perspektivischer Ansicht,
- Fig. 2: einen Axialschnitt durch das Ausführungsbeispiel nach Fig. 1,
- Fig. 3: eine abgeänderte Ausführungsform, die teilweise und im Axialschnitt dargestellt ist,
- Fig. 4: eine zweite Ausführungsform der Erfindung in perspektivischer Ansicht,
- Fig. 5: einen Axialschnitt des Ausführungsbeispiels nach Fig. 4,
- Fig. 6: einen Querschnitt nach der Linie VI - VI in Fig. 5.

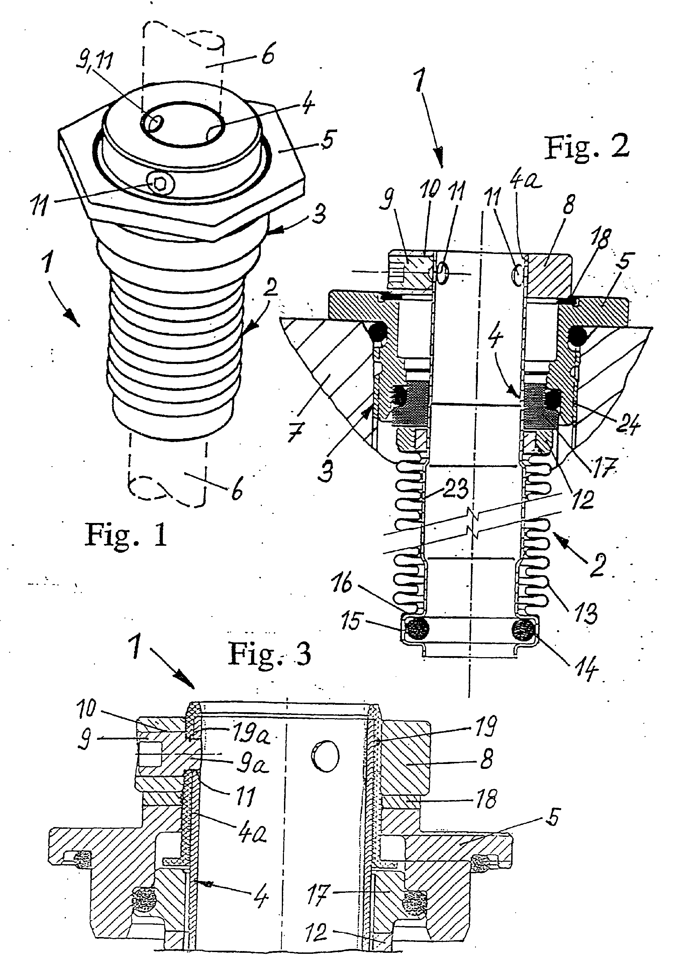

Die in den Fig. 1 und 2 allgemein mit 1 bezeichnete, einbaufertige Gleitringdichtung umfasst eine rotierende Einheit 2, deren Aufbau in Fig. 2 klar zu erkennen ist, mit einer Wellenschutzhülse 4, und eine stationäre Einheit 3 mit einem Montageteil 5, mit dem die Gleitringdichtung 1 an einem teilweise gezeigten Pumpengehäuse 7 befestigt wird. Die Gleitringdichtung 1 sitzt auf einer in Fig. 1 gestrichelt angedeuteten Welle 6 einer Kreiselpumpe (nicht gezeigt), wobei die Welle einen Durchmesser von etwa 8,0 bis 30,0 mm aufweist. Die Pumpe erbringt eine Leistung, die zwischen 0,35 KW bis 25,0 KW beträgt, und wird durch einen elektrischen Antriebsmotor (nicht gezeigt) angetrieben, wobei die Antriebswelle des Motors mit der Wellenpumpe 6 in herkömmlicher Weise gekuppelt ist, beispielsweise durch eine Schalenkupplung. Die Pumpe ist also eine Pumpe mit relativ geringer Leistung und weist dementsprechend eine Pumpenwelle auf, die einen relativ geringen Durchmesser hat.

Des weiteren weist die Wellenschutzhülse 4 auf ihrem aus dem Pumpengehäuse 7 herausragenden Längenabschnitt 4 a einen losen Befestigungsring 8 auf, der außen auf dem Abschnitt 4 a mittels mehrerer Schrauben 9 positioniert ist. Die Schrauben 9 sitzen in radialen Gewindelöchern 10 des Befestigungsringes 8. Es sind beispielsweise drei Schrauben 9 vorgesehen, und zwar in Übereinstimmung mit drei Löchern 11 im Längenabschnitt 4 a der Wellenschutzhülse 4. Die Schrauben 9 sind an ihrem Vorderende so ausgebildet, dass sie durch die Löcher 11 greifen können, wie es besser in Fig. 3 zu sehen ist, um u. a. die Gleitringdichtung 1 an der Pumpenwelle 6 befestigen zu können.

Die rotierende Einheit 2 weist des weiteren einen formstabilen Gleitring 12, eine Druckfeder 13, die eine axiale Federkraft auf den Gleitring 12 ausübt, und einen inneren, elastischen Dichtungsring 14, z. B. ein O-Ring, auf. Der elastische Dichtungsring 14 befindet sich in einer radial auswärts gerichteten Sickenausformung 15, die am inneren Ende der Wellenschutzhülse 4 vorgesehen ist. Die Sickenausformung 15 stellt gleichzeitig eine äußere Schulter 16 zur Verfügung, die eine Abstützfläche für die Druckfeder 13 bildet. Die Druckfeder 13 kann, wie gezeigt, ein metallener Faltenbalg oder auch eine wendelförmige Feder sein.

Die stationäre Einheit 3, welche die Wellenschutzhülse 4 umgibt, besteht im wesentlichen aus dem Montageteil 5 und aus einem von dem Montageteil gehaltenen Gegenring 17, an dem der Gleitring 12 mittels der Kraft der Druckfeder 13 axial anliegt. Der Gleitring 12 und der Gegenring 17 bilden die bekannten radialen Dichtungselemente der Gleitringdichtung 1 und bestehen aus dem für diesen Dichtungszweck bekannten Material.

Die Wellenschutzhülse 4, die aus rostfreiem Stahl und vorzugsweise aus gezogenem Rohrmaterial besteht, weist eine geringe Wandstärke auf. Diese Wandstärke ist eine solche, die geringer ist als die Wandstärke der bisher bekannten Wellenschutzhülse für eine Gleitringdichtung vom Kartuschentyp. Bezogen auf den jeweils gewählten Durchmesser der Pumpenwelle 6, auf welche die Wellenschutzhülse 4 aufgeschoben wird, beträgt die Wandstärke der Wellenschutzhülse 1,5% bis 6% und vorzugsweise 2% bis 4%. Vorzugsweise gelten die kleineren Zahlenwerte für größere Wellendurchmesser und umgekehrt. Die beiden Dichtungsringe, das heißt der Gleitring 12 und der Gegenring 17, weisen einen Außendurchmesser auf, der in Bezug auf den gewählten Durchmesser der Pumpenwelle 6 der zugehörige DIN-Normdurchmesser ist. Der jeweils erforderliche Normdurchmesser ist aus der entsprechenden DIN-Norm entnehmbar, welche für Gleitringdichtungspaarungen ohne Wellenschutzhülse Gültigkeit hat. Durch diese DIN-Norm ist auch gleichzeitig der jeweils zugehörige Einbauraum in dem Pumpengehäuse 7, das heißt in der entsprechenden Endwand des Pumpengehäuses, für die zugehörige Gleitringdichtungskonstruktion ohne Wellenschutzhülse festgelegt. Somit ist es möglich, dass die vorstehend beschriebene Gleitringdichtung 1 mit Wellenschutzhülse 4 in einen Einbauraum eines Pumpengehäuses 7, der für eine DIN-Gleitringdichtungskonstruktion ohne Wellenschutzhülse dimensioniert ist, eingesetzt werden kann.

Vorteilhaft weist die Gleitringdichtung 1 gemäß Fig. 2 zwischen dem Montageteil 5 und dem Befestigungsring 8 ein Distanzmittel zum Voreinstellen eines bestimmten Anlagedruckes des Gleitringes 12 an dem Gegenring 17 auf. Das Distanzmittel ist beispielsweise ein geschlossenenes Ringteil von etwa 1 mm bis 2 mm Dicke und legt in Verbindung mit der Federkraft der Druckfeder 13 den Anlagedruck des Gleitringes 12 an dem Gegenring 17 fest. Das Distanzmittel ist aus gleitfähigem Material, z. B. aus Teflon, und weist weiter die Eigenschaft auf, dass es sich bei Inbetriebnahme der auf der Pumpenwelle 6 montierten Gleitringdichtung 1 etwas abnutzt, so dass danach praktisch keine Reibung mehr zwischen den Teilen 5, 8 und 18 herrscht, die voreingestellte axiale Federkraft der Druckfeder 13 für den Anlagedruck des Gleitringes 12 an dem Gegenring 17 jedoch erhalten bleibt.

Um die Positionierung des Befestigungsringes 8 auf der Wellenschutzhülse 4 zu verbessern, kann die Gleitringdichtung 1 gemäß Fig. 3 eine Sicherungshülse 19 auf ihrem herausragenden Längenabschnitt 4 a aufweisen.

Diese Sicherungshülse besteht beispielsweise aus Kunststoff und haftet mit Festsitz auf dem Abschnitt 4 a. Ferner ist die Sicherungshülse 19 in Übereinstimmung mit der Anzahl der Löcher 11 der Hülse 4 mit gleich vielen Löchern 19 a versehen, so dass fluchtende Lochpaare 11, 19 a gebildet sind, in welche die Schrauben 9 des Befestigungsringes 8 eingreifen. Hierzu können die Schrauben 9 vorzugsweise mit einem Zapfen 9 a versehen sein. Die Hülse 19 bewirkt, dass der Befestigungsring 8 sicherer auf der Wellenschuztzhülse 4 positioniert ist. Im Übrigen stimmt die Ausführungsform der Gleitringdichtung 1 nach Fig. 3 in ihrer Konstruktion mit derjenigen nach Fig. 2 überein.

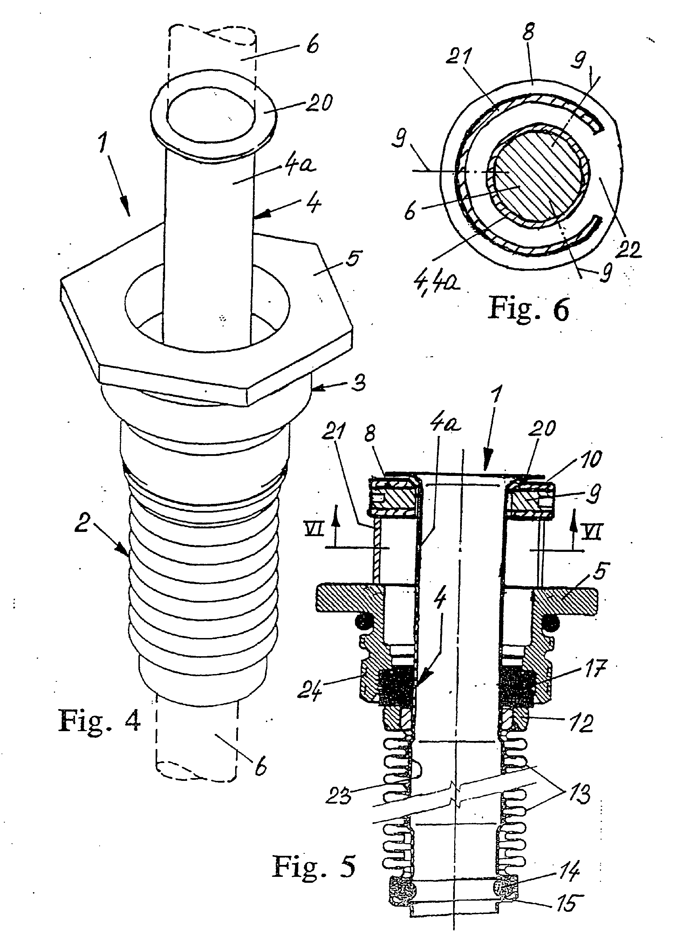

In den Fig. 4, 5 und 6 ist eine zweite Ausführungsform einer Gleitringdichtung 1 mit einer Wellenschutzhülse 4 gezeigt. Der Hauptunterschied zu der Ausführungsform nach den Fig. 1 bis 3 besteht darin, dass das freie Ende des herausragenden Längenabschnitts 4 a der Wellenschutzhülse eine radial auswärts gerichtete Anlageausbildung 20 für den Befestigungsring 8 der Wellenschutzhülse 4 aufweist, wobei der Befestigungsring in Fig. 4 der besseren Übersicht wegen nicht eingezeichnet ist. Die Anlageausbildung 20 besteht vorzugweise aus einem umgebogenen Umfangsrand des freien Endes der Wellenschutzhülse 4, wie Fig. 4 klar zeigt. Die Wellenschutzhülse 4 ist bei dieser Ausführungsform nicht mit Löchern versehen, weil eine entsprechende reibschlüssige Befestigung der Wellenschutzhülse auf der Pumpenwelle 6 auch dadurch erfolgen kann, dass die radialen Schrauben 9 des Befestigungsringes 8 gegen die Wellenschutzhülse 4 drücken und die Hülse 4 dadurch fest gegen die Pumpenwelle 6 gepresst wird. Es können jedoch auch Löcher 11 wie bei dem Beispiel nach den Figuren 1 bis 3 vorgesehen sein.

Um die gewünschte Anlagekraft des Gleitringes 12 an dem Gegenring 17 mittels der Druckfeder 13 auch bei diesem Beispiel schon im Herstellerwerk einstellen zu können, ist auch in diesem Fall ein Distanzmittel zwischen dem Befestigungsring 8 und dem Montageteil 5 vorgesehen. In dem hier gezeigten Fall besteht das Distanzmittel aus einem den herausragenden Längenabschnitt 4 a der Wellenschutzhülse 4 hülsenartig umgebenden, jedoch entfernbaren Ringteil. Die axiale Länge des Ringteils 21 bestimmt in Zusammenwirkung mit der axialen Druckfeder 13 die Anlagekraft, mit welcher der rotierende Gleitring 12 gegen den stationären Gegenring 17 gedrückt wird. Bei gegebener Axialkraft der Druckfeder 13 ist es in Verbindung mit unterschiedlich hohen Ringteilen 21 möglich, eine für den jeweiligen Anwendungsfall gewünschte Anlagekraft des Gleitringes 12 an dem Gegenring 17 einzustellen.

Nachdem die Gleitringdichtung 1 an dem Pumpengehäuse und an der Pumpenwelle montiert ist, wird das hülsenartige Ringteil 21 entfernt. Hierzu ist das Ringteil 21 vorteilhaft mit einem breiten Axialschlitz 22 versehen, dessen Breite wenigstens dem Außendurchmesser der Wellenschutzhülse 4 entspricht. So ist es auf einfache Weise möglich, das Ringteil 21 zwischen dem Befestigungsring 8 und dem Montageteil 5 seitlich herauszuschieben. Der übrige Aufbau dieser Gleitringdichtungsausführungsform stimmt mit demjenigen der weiter vorstehend beschriebenen Ausführungsformen der Gleitringdichtung 1 überein.

Bei allen Ausführungsformen kann die Wellenschuzthülse 4 geringen Durchmessers im Längsbereich der axialen Druckfeder 13 einen vergrößerten Außendurchmesser für die axiale Führung der Druckfeder 13 aufweisen. Ein solcher vergrößerter Außendurchmesser der Wellenschutzhülse 4 ist mit 23 gekennzeichnet. Die Herstellung eines solchen vergrößerten Außendurchmessers der Wellenschutzhülse 4 kann durch aufweitendes hydraulisches Formpressen der Wellenschutzhülse erfolgen. Auch die nach radial auswärts gerichtete Sickenausformung 15 der Wellenschutzhülse kann durch hydraulisches Formpressen hergestellt werden.

Das Montageteil 5 der stationären Einheit 3 ist vorzugsweise ein Hülsenteil mit einem Außengewinde 24, welches in ein entsprechendes Innengewinde des Pumpengehäuses 7 bzw. der Pumpengehäuseendwand eingeschraubt wird. Alternativ ist es auch möglich, anstelle des Außengewindes 24 ein Innengewinde vorzusehen. Hierzu besitzt das Montageteil 5 dann einen hülsenförmigen Außenring, an dessen Innenseite das Innengewinde vorgesehen ist. Eine solche Ausführung des Montageteils 5 kommt dann in Betracht, wenn das Pumpengehäuse einen Anschlussstutzen mit einem Außengewinde aufweist.

Des weiteren kann das Montageteil 5 an seinem Außenumfang eine Polygonalform aufweisen, wie es die Fig. 1 und 4 zeigen, Dies ermöglicht das Festziehen der eingesetzten Gleitringdichtung 1 mit einem Schraubenschlüssel.

Anstelle eines Befestigungsringes 8 für die Befestigung der Wellenschutzhülse 4 an der Pumpenwelle 6 kann beispielsweise auch die weiter vorstehend erwähnte Schalenkupplung verwendet werden. Die Wellenschutzhülse hat dann einen entsprechend langen herausragenden Längenabschnitt 4 a, dessen freies Ende durch die Schalenkupplung an der Pumpenwelle 6 festgeklemmt wird.

## Patentansprüche

1. Einbaufertige Gleitringdichtung (1) für die Welle (6) einer Pumpe, wobei die Welle (6) an einen Antriebsmotor ankuppelbar ist, wobei die Gleitringdichtung(1) eine rotierende Einheit (2) aus einer über die Pumpenwelle (6) schiebbaren Wellenschutzhülse (4) mit einem aus einem Gehäuse (7) der Pumpe herausragenden, an dieser Welle befestigbaren Längenabschnitt (4a), einem mit einer Federkraft axial belasteten, die Wellenschutzhülse (4) umgebenden, formstabilen Gleitring(12) und einem elastischen Dichtungsring (14) in der Wellenschutzhülse (4) sowie eine die Wellenschutzhülse (4) umgebende stationäre Einheit (3) aus einem formstabilen Gegenring (17), an dem der Gleitring(12) anliegt, und einem die Gleitringdichtung (1) an dem Gehäuse (7) der Pumpe befestigenden Montageteil (5) umfasst, **dadurch gekennzeichnet, dass** die Wandstärke der Wellenschutzhülse (4) derart gering ist, dass der Außendurchmesser des Gleitringes (12) und des Gegenringes (17) einem in Bezug auf den gewählten Durchmesser der Pumpenwelle (6) zugehörigen Normdurchmesser einer Gleitringdichtungspaarung ohne Wellenschutzhülse gemäß DIN entspricht.

2. Gleitringdichtung nach Anspruch 1, **dadurch gekennzeichnet, dass** die Wellenschutzhülse (4) eine Wandstärke aufweist, die 1,5% bis 6%, vorzugsweise 2% bis 4%, des Durchmessers der Pumpenwelle (6) beträgt.

3. Gleitringdichtung nach Anspruch 1 oder 2, **dadurch gekennzeichnet, dass** auf dem herausragenden Längenabschnitt (4 a) der Wellschutzhülse (4) ein loser Befestigungsring (8) mit radialen Gewindelöchem (10) mit Schrauben (9) für die Befestigung der Wellenschutzhülse auf der Pumpenwelle (6) positioniert ist.

4. Gleitringdichtung nach Anspruch 3, **dadurch gekennzeichnet, dass** der herausragende Längenabschnitt (4 a) der Wellenschutzhülse(4) mehrere, umfangsmäßig verteilte Löcher (11) aufweist, in welche die Schrauben (9) des Befestigungsringes (8) eingreifen.

5. Gleitringdichtung nach Anspruch 4, **dadurch gekennzeichnet, dass** auf dem herausragenden Längenabschnitt (4 a) der Wellenschutzhülse (4) eine Sicherungshülse (19) mit mehreren Löchern (19 a), die mit den zugehörigen Löchern (11) der Wellenschutzhülse (4) fluchten, sitzt und dass die Schrauben (9) des Befestigungsringes (8) in die jeweils fluchtenden Lochpaare(11, 19 a) eingreifen.

6. Gleitringdichtung nach Anspruch 3, **dadurch gekennzeichnet, dass** das freie Ende des herausragenden Längenabschnittes (4 a) der Wellenschutzhülse (4) eine radial auswärts gerichtete Anlageausbildung (20) für den Befestigungsring (8) der Wellenschutzhülse aufweist.

7. Gleitringdichtung nach Anspruch 6, **dadurch gekennzeichnet, dass** die Anlageausbildung (20) aus einem umgebogenen Umfangsrand des freien Endes der Wellenschutzhülse (4) besteht.

8. Gleitringdichtung nach Anspruch 3, 4, 5, 6 oder 7, **dadurch gekennzeichnet, dass** wenigstens ein Distanzmittel (18, 21) zwischen dem Befestigungsring (8) und dem Montageteil (5) der stationären Einheit (3) zum Voreinstellen eines bestimmten Anlagedruckes des Gleitringes (12) an dem Gegenring (13) vorgesehen ist.

9. Gleitringdichtung nach Anspruch 8, **dadurch gekennzeichnet, dass** das Distanzmittel (21) aus einem den herausragenden Längenabschnitt (4 a) Wellenschutzhülse (4) umgebenden, entfernbaren Ringteil besteht.

10. Gleitringdichtung nach Anspruch 9, **dadurch gekennzeichnet, dass** das entfernbare Ringteil (21) einen Axialschlitz (22) aufweist, dessen Breite wenigstens dem Außendurchmesser der Wellenschutzhülse (4) entspricht.

11. Gleitringdichtung nach Anspruch 8, **dadurch gekennzeichnet, dass** das Distanzmittel (18) ein geschlossenes Ringteil aus gleitfähigem, bei Inbetriebnahme der Gleitringdichtung (1) sich etwas abnutzendem Material besteht.

12. Gleitringdichtung nach einem der Ansprüche 1 bis 11, **dadurch gekennzeichnet, dass** die Wellenschutzhülse (4) aus gezogenem Rohrmaterial aus rostfreiem Stahl besteht.

13. Gleitringdichtung nach einem der Ansprüche 1 bis 12, **dadurch gekennzeichnet, dass** die Wellenschutzhülse (4) an ihrem Ende eine radial auswärts gerichtete Sickenausformung (15) für die Aufnahme des elastischen Dichtungsringes (14) der rotierenden Einheit (2) aufweist.

14. Gleitringdichtung nach Anspruch 13, **dadurch gekennzeichnet, dass** die äußere Schulter (16) der Sickenausformung (15) eine Abstützfläche für die Federkraft (13) der rotierenden Einheit (2) bildet.

15. Gleitringdichtung nach einem der Ansprüche 1 bis 14, **dadurch gekennzeichnet, dass** die Federkraft (13) durch einen metallenen Faltenbalg oder durch eine wendelförmige Druckfeder gebildet ist und dass die Wellenschutzhülse (4) im Bereich des Faltenbalges bzw. der Druckfeder einen vergrößerten Außendurchmesser (23) für die axiale Führung des Faltenbalges bzw. der Druckfeder aufweist.

16. Gleitringdichtung nach einem der Ansprüche 1 bis 15, **dadurch gekennzeichnet, dass** das Montageteil (5) der stationären Einheit (3) ein Hülsenteil mit einem Außengewinde (24) oder Innengewinde zur Befestigung der Gleitringdichtung (1) an dem Pumpengehäuse (7) ist.

17. Gleitringdichtung nach Anspruch 16, **dadurch gekennzeichnet, dass** das Montageteil (5) an seinem Außenumfang eine Polygonalform aufweist.

18. Gleitringdichtung nach Anspruch 13 oder 14, **dadurch gekennzeichnet, dass** die Sickenausformung (15) und/oder der vergrößerte Außendurchmesser (23) der Wellenschutzhülse (4) durch hydraulisches Formpressen der Wellenschutzhülse hergestellt ist.

## Claims

1. A ready-to-fit axial face seal (1) for the shaft (6) of a pump, wherein the shaft (6) may be coupled onto a drive motor, wherein the axial face seal (1) comprises a rotating unit (2) of a shaft protection sleeve (4) which is pushable over the pump shaft (6), with a longitudinal section (4a) protruding out of a housing (7) of the pump and fastenable to this shaft, of a shape-stable axial face seal ring (12) axially loaded with a spring force and surrounding the shaft protection sleeve (4), and of an elastic sealing ring (14) in the shaft protection sleeve (4), as well as a stationary unit (3) surrounding the shaft protection sleeve (4), of a shape-stable counter ring (17) on which the axial face seal ring (12) bears, and of an assembly part (5) fastening the axial face seal (1) on the housing (7) of the pump, **characterised in that** the wall thickness of the shaft protection sleeve (4) is small to the extent that the outer diameter of the axial face seal ring (12) and of the counter ring (17), with regard to the selected diameter of the pump shaft (6), corresponds to an associated standard diameter of an axial face seal pairing without shaft protection sleeve according to DIN.

2. An axial face seal according to claim 1, **characterised in that** the shaft protection sleeve (4) has a wall thickness which is 1.5% to 6%, preferably 2% to 4% of the diameter of the pump shaft (6).

3. An axial face seal according to claim 1 or 2, **characterised in that** on the protruding longitudinal section (4a) of the shaft protection sleeve (4), there is positioned a loose fastening ring (8) with radial threaded holes (10) with screws (9), for fastening the shaft protection sleeve on the pump shaft (6).

4. An axial face seal according to claim 3, **characterised in that** the protruding longitudinal section (4a) of the shaft protection sleeve (4) comprises several holes (11) distributed peripherally, into which the screws (9) of the fastening ring (8) engage.

5. An axial face seal according to claim 4, **characterised in that** on the protruding longitudinal section (4a) of the shaft protection sleeve (4) there is seated a securement sleeve (19) with several holes (19a) which are flush with the associated holes (11) of the shaft protection sleeve (4), and that the screws (9) of the fastening ring (8) engage into the respective flush hole pairs (11, 19a).

6. An axial face seal according to claim 3, **characterised in that** the free end of the protruding longitudinal section (4a) of the shaft protection sleeve (4) comprises a radially outwardly directed bearing formation (20) for the fastening ring (8) of the shaft protection sleeve.

7. An axial face seal according to claim 6, **characterised in that** the bearing formation (20) consists of a bent-up peripheral edge of the free end of the shaft protection sleeve (4) .

8. An axial face seal according to claim 3, 4, 5, 6, or 7, **characterised in that** at least one distancing means (18, 21) is provided between the fastening ring (8) and the assembly part (5) of the stationary unit (3) for presetting a certain bearing pressure of the axial face seal ring (12) on the counter ring (13).

9. An axial face seal according to claim 8, **characterised in that** the distancing means (21) consists of a removable ring part surrounding the protruding longitudinal section (4a) of the shaft protection sleeve (4).

10. An axial face seal according to claim 9, **characterised in that** the removable ring part (21) comprises an axial slot (22) whose width corresponds at least to the outer diameter of the shaft protection sleeve (4).

11. An axial face seal according to claim 8, **characterised in that** the distancing means (18) consists of a closed ring part of lubricative material wearing somewhat on operation of the axial face seal (1).

12. An axial face seal according to one of the claims 1 to 11, **characterised in that** the shaft protection sleeve (4) consists of drawn tube material of stainless steel.

13. An axial face seal according to one of the claims 1 to 12, **characterised in that** the shaft protection sleeve (4) at its end comprises a radially outwardly directed beading formation (15) for receiving the elastic sealing ring (14) of the rotating unit (2).

14. An axial face seal according to claim 13, **characterised in that** the outer shoulder (16) of the beading formation (15) forms a support surface for the spring force (13) of the rotating unit (2).

15. An axial face seal according to one of the claims 1 to 14, **characterised in that** the spring force (13) is formed by a metallic bellows or by way of a spiral-shaped compression spring and that the shaft protection sleeve (4) in the region of the bellows or the compression spring has an enlarged outer diameter (23) for the axial guiding of the bellows or the compression spring.

16. An axial face seal according to one of the claims 1 to 15, **characterised in that** the assembly part (5) of the stationary unit (3) comprises a sleeve part with an outer thread (24) or inner thread for fastening the axial face seal (1) on the pump housing (7).

17. An axial face seal according to claim 16, **characterised in that** the assembly part (5) on its outer circumference has a polygonal shape.

18. An axial face seal according to claim 13 or 14, **characterised in that** the beading formation (15) and/or the enlarged outer diameter (23) of the shaft protection sleeve (4) is manufactured by hydraulic compression moulding of shaft protection sleeve.

## Revendications

1. Garniture mécanique d'étanchéité (1), prête à être montée, pour l'arbre (6) d'une pompe, l'arbre (6) pouvant être couplé à un moteur d'entraînement, la garniture mécanique d'étanchéité (1) comprenant une unité rotative (2) constituée d'un manchon de protection d'arbre (4) pouvant coulisser sur l'arbre de pompe (6) avec une partie de longueur (4a) dépassant d'un carter (7) de la pompe et pouvant être fixée à cet arbre, une bague de glissement (12) sollicitée axialement avec une force de ressort, entourant le manchon de protection d'arbre (4) et indéformable et une bague d'étanchéité élastique (14) dans le manchon de protection d'arbre (4), ainsi qu'une unité (3) fixe, entourant le manchon de protection d'arbre (4), constituée d'une contre-bague (17) indéformable, sur laquelle s'appuie la bague de glissement (12), et une partie de montage (5) fixant la garniture mécanique d'étanchéité (1) sur le carter (7) de la pompe, **caractérisée en ce que** l'épaisseur de paroi du manchon de protection d'arbre (4) est faible à un point tel que le diamètre extérieur de la bague de glissement (12) et de la contre-bague (17) correspond à un diamètre normal, spécifique par rapport au diamètre choisi de l'arbre de pompe (6), d'un appariement de garniture mécanique d'étanchéité sans manchon de protection d'arbre selon DIN.

2. Garniture mécanique d'étanchéité selon la revendication 1, **caractérisée en ce que** le manchon de protection d'arbre (4) présente une épaisseur de paroi qui représente 1,5 % à 6 %, de préférence 2 % à 4 %, du diamètre de l'arbre de pompe (6).

3. Garniture mécanique d'étanchéité selon la revendication 1 ou 2, **caractérisée en ce que**, sur la partie de longueur (4a) dépassante du manchon de protection d'arbre (4), une bague de fixation (8) amovible avec des trous filetés (10) radiaux est positionnée avec des vis (9) pour la fixation du manchon de protection d'arbre sur l'arbre de pompe (6).

4. Garniture mécanique d'étanchéité selon la revendication 3, **caractérisée en ce que** la partie de longueur (4a) dépassante du manchon de protection d'arbre (4) présente plusieurs trous (11) répartis sur le pourtour, dans lesquels s'engagent les vis (9) de la bague de fixation (8).

5. Garniture mécanique d'étanchéité selon la revendication 4, **caractérisée en ce qu'**un manchon de sécurité (19) avec plusieurs trous (19a), qui sont alignés avec les trous (11) correspondants du manchon de protection d'arbre (4), est situé sur la partie de longueur dépassante (4a) du manchon de protection d'arbre (4) et **en ce que** les vis (9) de la bague de fixation (8) s'engagent dans les paires de trous (11, 19a), respectivement alignés.

6. Garniture mécanique d'étanchéité selon la revendication 3, **caractérisée en ce que** l'extrémité libre de la partie de longueur (4a) dépassante du manchon de protection d'arbre (4) présente une structure d'appui (20) dirigée radialement vers l'extérieur pour la bague de fixation (8) du manchon de protection d'arbre.

7. Garniture mécanique d'étanchéité selon la revendication 6, **caractérisée en ce que** la structure d'appui (20) est constituée par un bord périphérique replié de l'extrémité libre du manchon de protection d'arbre (4).

8. Garniture mécanique d'étanchéité selon la revendication 3, 4, 5, 6 ou 7, **caractérisée en ce qu'**au moins un moyen d'espacement (18, 21) est prévu entre la bague de fixation (8) et la partie de montage (5) de l'unité fixe (3) pour le préréglage d'une pression d'appui déterminée de la bague de glissement (12) sur la contre-bague (13).

9. Garniture mécanique d'étanchéité selon la revendication 8, **caractérisée en ce que** le moyen d'espacement (21) est constitué d'une pièce annulaire enlevable, entourant la partie de longueur (4a) dépassante du manchon de protection d'arbre (4).

10. Garniture mécanique d'étanchéité selon la revendication 9, **caractérisée en ce que** la pièce annulaire enlevable (21) présente une fente axiale (22), dont la largeur correspond au moins au diamètre extérieur du manchon de protection d'arbre (4).

11. Garniture mécanique d'étanchéité selon la revendication 8, **caractérisée en ce que** le moyen d'espacement (18) se compose d'une pièce annulaire fermée en un matériau apte au glissement, s'usant légèrement lors de la mise en service de la garniture mécanique d'étanchéité (1).

12. Garniture mécanique d'étanchéité selon l'une des revendications 1 à 11, **caractérisée en ce que** le manchon de protection d'arbre (4) est constitué de matériau tubulaire étiré en acier inoxydable.

13. Garniture mécanique d'étanchéité selon l'une des revendications 1 à 12, **caractérisée en ce que** le manchon de protection d'arbre (4) présente à son extrémité, une partie formée de moulure (15) dirigée radialement vers l'extérieur pour le logement de la bague d'étanchéité élastique (14) de l'unité rotative (2).

14. Garniture mécanique d'étanchéité selon la revendication 13, **caractérisée en ce que** l'épaulement extérieur (16) de la partie formée de moulure (15) forme une surface d'appui pour la force de ressort (13) de l'unité rotative (2).

15. Garniture mécanique d'étanchéité selon l'une des revendications 1 à 14, **caractérisée en ce que** la force de ressort (13) est établie par un soufflet métallique ou par un ressort de pression hélicoïdal et **en ce que** le manchon de protection d'arbre (4) présente dans la zone du soufflet ou du ressort de pression un diamètre extérieur (23) agrandi pour le guidage axial du soufflet ou du ressort de pression.

16. Garniture mécanique d'étanchéité selon l'une des revendications 1 à 15, **caractérisée en ce que** la partie de montage (5) de l'unité fixe (3) est une partie de manchon avec un filetage extérieur (24) ou un filetage intérieur pour la fixation de la garniture mécanique d'étanchéité (1) sur le carter de pompe (7).

17. Garniture mécanique d'étanchéité selon la revendication 16, **caractérisée en ce que** la partie de montage (5) présente sur son pourtour extérieur une forme polygonale.

18. Garniture mécanique d'étanchéité selon la revendication 13 ou 14, **caractérisée en ce que** la partie formée de moulure (15) et/ou le diamètre extérieur (23) agrandi du manchon de protection d'arbre (4) est produit par moulage par compression hydraulique du manchon de protection d'arbre.
